(19) Europäisches Patentamt
European Patent Office
Office européen des brevets

(11) EP 3 395 173 A1

(12) EUROPEAN PATENT APPLICATION

(43) Date of publication:
**31.10.2018 Bulletin 2018/44**

(21) Application number: **17167944.2**

(22) Date of filing: **25.04.2017**

(51) Int Cl.:
***A01N 43/707*** *(2006.01)* ***A01N 43/90*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Rotam Agrochem International Company Limited**
**Hong Kong (HK)**

(72) Inventor: **BRISTOW, James Timothy**
**Chai Wan, Hong Kong N/A (CN)**

(74) Representative: **Akers, Noel James**
**N.J. Akers & Co**
**63 Lemon Street**
**Truro, Cornwall TR1 2PN (GB)**

# (54) METHOD OF CONTROLLING GROWTH OF ALS-TOLERANT PLANTS

(57) A method of controlling the growth of ALS-tolerant plants is provided, the method comprising applying to the plants and/or their locus a herbicidally effective amount of a combination of (A) metribuzin and (B) one or more triazolopyrimidine sulfonanilides. The use of a herbicidally effective amount of a combination of (A) metribuzin and (B) one or more triazolopyrimidine sulfonanilides in the control of the growth of ALS- tolerant plants is also provided. A composition for the control of ALS-tolerant plants comprising a herbicidally effective amount of a combination of (A) metribuzin and (B) one or more triazolopyrimidine sulfonanilides is also disclosed.

EP 3 395 173 A1

## Description

The present invention relates to a method of controlling the growth of ALS-tolerant plants.

The protection of crops from undesirable vegetation, which inhibits crop growth, is a constantly recurring problem in agriculture. To solve this problem, researchers are trying to develop an extensive range of chemicals and chemical formulations effective in the control of such undesirable growth. Chemical herbicides of many types have been disclosed in the literature and a large number are in commercial use.

However, one problem that is now emerging through continued use of chemical herbicides is the development of plants exhibiting resistance or tolerance to one or more herbicidally active ingredients. One particular class of herbicides that are facing increasing tolerance in the target plants is the triazolopyrimidine sulfonanilide herbicides (TPS). Triazolopyrimidine sulfonanilide herbicides are acetolactate synthase (ALS) inhibitors. The compounds act by inhibiting biosynthesis of the essential amino acids valine and isoleucine, thereby stopping cell division in the plant and plant growth. There is an increasing occurrence of plants developing ALS inhibitor-tolerance, which in turn reduces or eliminates the effectiveness of triazolopyrimidine sulfonanilide herbicides in controlling the growth of such plants. In some cases, certain undesirable plants have developed tolerance to ALS-inhibitors to such an extent that triazolopyrimidine sulfonanilide herbicides exhibit little or no activity in their control.

Therefore, there is a need for an improved method for controlling the growth of plants exhibiting ALS inhibitor-tolerance or ALS inhibitor-resistance (referred to herein as 'ALS-tolerant plants').

Metribuzin (IUPAC name: 4-amino-6-tert-butyl-4,5-dihydro-3-methylthio-1,2,4-triazin-5-one; 4-amino-6-tert-butyl-3-methylthio-1,2,4-triazin-5(4H)-one) is a triazinone herbicide and has the following chemical structure:

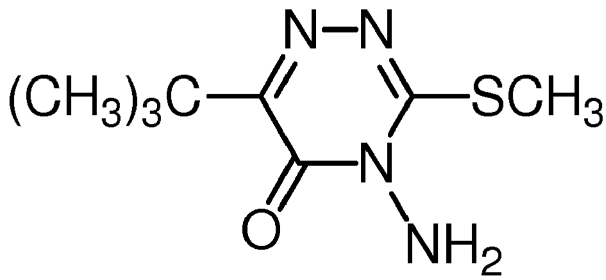

Metribuzin is an inhibitor of photosynthesis in plants. The compound can be absorbed by roots and leaves of the plants and then translocate in the xylem. Metribuzin is active in the control of grasses and broad-leaved weeds. Metribuzin is commercially available in herbicidal compositions and methods for its preparation are known in the art.

Surprisingly, it has been found that a combination of metribuzin with one or more triazolopyrimidine sulfonanilides provides an effective treatment for ALS-tolerant plants and allows the plant growth to be controlled. In particular, it has been found that the combination of metribuzin and one or more triazolopyrimidine sulfonanilides displays a synergistic effect in the control of ALS-tolerant plants and exhibits an activity that is significantly greater than the activity of metribuzin alone or the level of activity expected from the combination of the individual active ingredients.

Combinations of triazolopyrimidine sulfonanilides and triazinone herbicides are suggested in CN102273466A. However, there is nothing teaching or suggesting that a combination of metribuzin and one or more triazolopyrimidine sulfonanilides exhibits a synergistic effect in the control of ALS-tolerant plants, as has now been found.

Accordingly, in a first aspect, the present invention provides a method for the control of the growth of ALS-tolerant plants, the method comprising applying to the plants and/or their locus a herbicidally effective amount of a combination of (A) metribuzin and (B) one or more triazolopyrimidine sulfonanilides .

In a further aspect, the present invention provides the use of a herbicidally effective amount of a combination of (A) metribuzin and (B) one or more triazolopyrimidine sulfonanilides in the control of the growth of ALS-tolerant plants.

The present invention also provides a composition for the control of ALS-tolerant plants comprising a herbicidally effective amount of a combination of (A) metribuzin and (B) one or more triazolopyrimidine sulfonanilides.

The term "herbicide" as used herein, refers to a compound that exhibits activity in the control of the growth of plants. The term "herbicidally effective amount" as used herein, refers to the quantity of such a compound or combination of such compounds that is capable of producing a controlling effect on the growth of plants. A controlling effect includes all deviations from the natural development and growth of the plant, including, for example, killing the plant, retardation of one or more aspects of the development and growth of the plant, leaf burn, albinism, dwarfing and the like.

The term "plants" as used herein refers to all physical parts of a plant, including shoots, leaves, needles, stalks, stems, fruit bodies, fruits, seeds, roots, tubers and rhizomes.

If the abbreviation of the "common name" of the herbicides is used in the present specification, it is to be understood as including all conventional derivatives, such as the esters, in particular the lower alkyl esters, especially

the methyl ester, and salts, and isomers, in particular the optical isomers, and all commercially available form or forms of the compound. If the "common name" refers to an ester or salt, this also includes all of the other usual derivatives, such as other esters and salts, the free acids, neutral compounds and isomers, in particular optical isomers, and all commercially available forms.

The present invention employs a combination of (A) metribuzin and (B) one or more triazolopyrimidine sulfonanilides. The invention may employ a single triazolopyrimidine sulfonanilide. Alternatively, the invention may employ a plurality of different triazolopyrimidine sulfonanilides, for example a mixture of 2, 3 or more triazolopyrimidine sulfonanilides as component (B). In many preferred embodiments, component (B) is a single triazolopyrimidine sulfonanilides.

As noted above, metribuzin is a known herbicidal compound and is available commercially.

Similarly, suitable herbicidal triazolopyrimidine sulfonanilides for use in the present invention are known in the art and are commercially available. Suitable triazolopyrimidine sulfonanilides for use in component (B) include one or more of cloransulam, diclosulam, florasulam, flumetsulam, metosulam, penoxsulam and pyroxsulam. Preferred triazolopyrimidine sulfonanilides are florasulam, diclosulam, flumetsulam, penoxsulam, and mixtures of two, three or all thereof. In a particularly preferred embodiment, component (B) comprises florasulam. In one embodiment, the present invention employs a combination of metribuzin and a single triazolopyrimidine sulfonanilide florasulam.

In general, the application rate of the active ingredients (A) metribuzin and (B) one or more triazolopyrimidine sulfonanilides depends on such factors as the type of weed, type of crop plant, soil type, season, climate, soil ecology and various other factors. The application rate of the components for a given set of conditions can readily be determined by routine trials.

In general, the components (A) metribuzin and (B) one or more triazolopyrimidine sulfonanilides can be applied at an application rate of from about 0.02 kilograms/hectare (kg/ha) to about 2 kg/ha of the total amount of active ingredients being applied. Preferably, the application rate is from about 0.05 kg/ha to about 1.5 kg/ha of the total amount of active ingredients.

Metribuzin may be applied in an amount of at least 5 g/ha, preferably at least 10 g/ha, more preferably at least 15 g/ha, still more preferably at least 20 g/ha. Metribuzin may be applied at an application rate of up to 600 g/ha, preferably up to 500 g/ha, more preferably up to 400 g/ha, more preferably still up to 300 g/ha. For many embodiments an application rate of up to 100 g/ha is very suitable. In some preferred embodiments, metribuzin is applied in an amount of 80 g/ha.

The one or more triazolopyrimidine sulfonanilides may be applied in a total amount of at least 1 g/ha, preferably at least 1.5 g/ha, more preferably at least 2 g/ha. In many embodiments, an application rate of at least 3 g/ha is very suitable, more preferably at least 4 g/ha. The one or more triazolopyrimidine sulfonanilides may be applied in a total amount of up to 200 g/ha, preferably up to 150 g/ha, more preferably up to 125 g/ha, still more preferably up to 100 g/ha. For many embodiments, an application rate of from 3 g/ha to 70 g/ha is very suitable, more preferably from 4 to 60 g/ha, still more preferably from 5 to 50 g/ha. An application rate of up to 40 g/ha of the one or more triazolopyrimidine sulfonanilides is preferred for many embodiments.

The synergistic effects of (A) metribuzin and (B) one or more triazolopyrimidine sulfonanilides when combined or used together are exhibited in a wide range of weight ratios of the two components. The components (A) and (B) may be applied in similar or equal amounts. Component (B), one or more triazolopyrimidine sulfonanilides, may be applied in larger amounts by weight than component (A), metribuzin. More preferably for many embodiments, component (A) metribuzin is applied in a higher amount by weight than component (B) one or more triazolopyrimidine sulfonanilides.

In the method of the present invention, the weight ratio of (A) metribuzin and (B) one or more triazolopyrimidine sulfonanilides preferably is up to 400:1, more preferably up to 300:1, still more preferably up to 200:1, more preferably still up to 150:1, with a ratio up to 70:1 being preferred in many embodiments. For many embodiments, a weight ratio of (A) metribuzin to (B) one or more triazolopyrimidine sulfonanilides of up to 50:1 is very suitable, preferably up to 40:1, for example up to 20:1.

The weight ratio of (A) metribuzin and (B) one or more triazolopyrimidine sulfonanilides is preferably greater than 1:20, more preferably greater than 1:10, still more preferably greater than 1:5, more preferably still greater than 1:2, with a ratio of greater than 1:1 being suitable for many embodiments.

The weight ratio of metribuzin to triazolopyrimidine sulfonanilide preferably lies within the range of from 1:5 to 300:1. Preferably, the weight ratio of (A) metribuzin and (B) one or more triazolopyrimidine sulfonanilides is from about 1:4 to about 250:1, more preferably from about 1:1 to about 200:1, still more preferably from about 1:1 to about 100:1, more preferably still from about 1:1 to about 70:1. In many embodiments, the weight ratio of (A) metribuzin to (B) one or more triazolopyrimidine sulfonanilides is from 1:1 to 50:1, preferably from 1:1 to 20:1, still more preferably from 1:1 to 16:1.

The components (A) metribuzin and (B) one or more triazolopyrimidine sulfonanilides may be applied to the plants and/or their locus simultaneously and/or consecutively. The components may be employed in the form of separate formulations. Alternatively, the components (A) and (B) may be employed as a mixture in a single formulation.

The components (A) metribuzin and (B) one or more triazolopyrimidine sulfonanilides may be applied at any stage in the growth of the plants to be controlled. For example, the components may be applied to a locus pre-emergence,

for example as a soil treatment. Alternatively or in addition, the components may be applied post-emergence of the plants to be controlled, for example as a foliar application or a soil treatment.

The present invention has been found to be particularly effective in the control of a range of ALS-resistant plants when applied post-emergence.

The components (A) metribuzin and (B) one or more triazolopyrimidine sulfonanilides may be applied to the plants or their locus once. Alternatively, the components may be applied a plurality of times. Particularly effective control of undesirable plants has been achieved using just a single application of the components or two applications spaced apart in time.

The combination of (A) metribuzin and (B) one or more triazolopyrimidine sulfonanilides is useful in treating a range of crops, including cereals, for example wheat, including both soft wheat and durum wheat, barley, rye, oats, maize, rice, sorghum, triticale and related crops; fruit, such as pomes, stone fruit and soft fruit, for example apples, grapes, pears, plums, peaches, almonds, cherries, and berries, for example strawberries, raspberries and blackberries; leguminous plants, for example beans, lentils, peas, soybeans, and peanuts; oil plants, for example rape, mustard, and sunflowers; cucurbitaceae, for example marrows, cucumbers, and melons; fibre plants, for example cotton, flax, hemp, and jute; citrus fruit, for example oranges, lemons, grapefruit and mandarins; vegetables, for example spinach, lettuce, asparagus, cabbages, carrots, onions, tomatoes, potatoes, and paprika; ornamentals, such as flowers, shrubs, broad-leaved trees and evergreens, for example conifers, as well as sugarcane.

In a preferred embodiment, the present invention is used for controlling growth of undesirable plants in cereals, leguminous plants, fibre plants and vegetables, more preferably in wheat, including both soft wheat and durum wheat, barley, rye, oats, maize, rice, sorghum, triticale, beans, lentils, peas, soybeans, and peanuts, cotton, flax, hemp, jute, spinach, lettuce, asparagus, cabbages, carrots, onions, tomatoes, potatoes, and paprika, more preferably in wheat, including both soft wheat and durum wheat, barley, rye, oats, triticale, maize, rice, soybeans, cotton, tomatoes and potatoes.

The present invention has been found to be particularly effective in the control of undesirable ALS-tolerant plants in wheat, including both soft wheat and durum wheat, barley, rye, oats, maize and triticale.

Suitable crops that may be treated include those which are tolerant to metribuzin and triazolopyrimidine sulfonanilides. The tolerance can be a natural tolerance produced by selective breeding or can be artificially introduced by genetic modification of the crop plants. In this respect, 'tolerance' means a low susceptibility to damage caused by one or more particular herbicides, in the present case metribuzin and triazolopyrimidine sulfonanilides.

The present invention finds use in the control of a wide range of plants that have developed tolerance or resistance to ALS-inhibitors, in particular triazolopyrimidine sulfonanilides. ALS-tolerant plants that may be controlled include broadleaved weeds, grasses and sedges, for example, *Abutilon* spp.; *Acalypha* spp.; *Acanthospermum* spp.; *Agrostemma* spp.; *Alopecurus* spp.; *Amaranthus* spp.; *Ambrosia* spp.; *Amsinckia* spp.; *Anoda* spp.; *Anthemis* spp.; *Asperugo* spp.; *Atriplex* spp.; *Avena* spp.; *Boraginaceae* spp.; *Brachiaria* spp.; *Brassica* spp.; *Bromus* spp.; *Camelina* spp.; *Capsella* spp.; *Cardamine* spp.; *Cassia* spp.; *Cenchrus* spp.; *Cerastium* spp.; *Chenopodium* spp.; *Chorispora* spp.; *Claytonia* spp.; *Conyza* spp.; *Cyperus* spp.; *Dactyloctenium* spp.; *Datura* spp.; *Descurainia* spp.; *Desmodium* spp.; *Digitaria* spp.; *Draba* spp.; *Echinochloa* spp.; *Eleusine* spp.; *Elymus* spp.; *Eragrostis* spp.; *Eriochloa* spp.; *Erodium* spp.; *Eupatorium* spp.; *Euphorbia* spp.; *Fallopia* spp.; *Fumaria* spp.; *Galeopsis* spp.; *Galinsoga* spp.; *Galium* spp.; *Geranium* spp.; *Glebionis* spp.; *Helianthus* spp.; *Hibiscus* spp.; *Hordeum* spp.; *Ipomoea* spp.; *Jacquemontia* spp.; *Kochia* spp.; *Lactuca* spp.; *Lamium* spp.; *Lepidium* spp.; *Leptochloa* spp.; *Lithospermum* spp.; *Lolium* spp.; *Matricaria* spp.; *Melochia* spp.; *Mercurialis* spp.; *Mollugo* spp.; *Myosotis* spp.; *Oenothera* spp.; *Oryza* spp.; *Panicum* spp.; *Papaver* spp.; *Persicaria* spp.; *Poa* spp.; *Polemonium* spp.; *Polygonum* spp.; *Portulaca* spp.; *Ranunculus* spp.; *Raphanus* spp.; *Reseda* spp.; *Richardia* spp.; *Rumex* spp.; *Senecio* spp.; *Sesbania* spp.; *Setaria* spp.; *Sida* spp.; *Sinapis* spp.; *Sisymbrium* spp.; *Slda* spp.; *Solanum* spp.; *Sonchus* spp.; *Sorghum* spp.; *Spergula* spp.; *Stellaria* spp.; *Thlaspi* spp.; *Trifolium* spp.; *Triticum* spp.; *Urtica* spp.; *Vaccaria* spp.; *Veronica* spp.; *Vicia* spp.; *Viola* spp.; and *Xanthium* spp.

The combination of (A) metribuzin and (B) one and more triazolopyrimidine sulfonanilides is particularly effective in the control of the following plants which have developed ALS-tolerant varieties: Velvetleaf (*Abutilon theophrasti*); Hophornbeam Copperleaf (*Acalypha ostryifolia*); Bristly Starbur (*Acanthospermum hispidum*); Corncockle (*Agrostemma githago*); Blackgrass (*Alopecurus myosuroides*); Pigweeds (*Amaranthus* spp.); Common ragweed (*Ambrosia artemisiifolia*); Tarweed fiddleneck (*Amsinckia lycopsoides*); Spurred Anoda (*Anoda cristata*); Mayweeds (*Anthemis cotula*); Catchweed (Madwort) (*Asperugo procumbens*); Common orache (*Atriplex patula*); Wild-Oat (*Avena fatua*); Wild Oats (*Avena* spp.); Bugloss (*Boraginaceae*); Broadleaf Signalpress (*Brachiaria platyphylla*); Volunteer oilseed rape (*Brassica napus*); Wild Mustards (*Brassica* spp.); Rescuegrass (*Bromus catharticus*); Japanese brome (*Bromus japonicus*); Ripgut brome (*Bromus rigidus*); Cheatgrass (*Bromus tectorum*); Smallseed falseflax (*Camelina microcarpa*); Shepherd's purse (*Capsella bursa-pastoris*); Bittercress (*Cardamine hirsuta*); Sicklepod (*Cassia obtusifolia*); Sandbur (*Cenchrus* spp.); Mousear chickweed (*Cerastium vulgatum*); Fat-hen (*Chenopodium album*); Lambsquarters (*Chenopodium* spp.); Blue mustard (*Chorispora tenella*); Miners lettuce (*Claytonia perfoliata*); Horseweed Marestail (*Conyza canadensis*); Yellow nutsedge (*Cyperus esculentus*); Crowfootgrass (*Dactyloctenium aegyptium*); Jimsonweed (*Datura stramonium*); Tansy

mustard (*Descurainia pinnata*); Florida Beqqarweed (*Desmodium tortuosum*); Crabgrass (*Digitaria* spp.); Spring whitlowgrass (Vernal) (*Draba verna*); Junglerice (*Echinochloa colonum*); Barnyardgrass (*Echinochloa crus-galli*); Goosegrass (*Eleusine indica*); Common couch (*Elymus repens*); Stinkgrass (*Eragrostis* spp.); Cupgrass (*Eriochloa gracilis*); Filaree, Redstem (*Erodium cicutarium*); Dogfennel (*Eupatorium capillifolium*); Spurge, Sun (*Euphorbia helioscopia*); Spotted Spurge (*Euphorbia maculata*); Black-bindweed (*Fallopia convolvulus*); Fumitory (*Fumaria officinalis*); Hemp-nettle (*Galeopsis*); Galinsoga (*Galinsoga* spp.); Cleavers (*Galium aparine*); Crane's-bill (*Geranium*); Geranium (*Geranium* spp.); Corn Marigold (*Glebionis segetum*); Sunflower (*Helianthus* spp.); Venice Mallow (*Hibiscus trionum*); Little barley (*Hordeum pusillum*); Morningqlorv, Ivyleaf (*Ipomoea hederacea*); Morningglory, Pitted (*Ipomoea lacunosa*); Tall morningqlory (*Ipomoea purpurea*); Smallflower morningqlory (*Jacquemontia tamnifolia*); Kochia (*Kochia scoparia*); Prickly lettuce (*Lactuca serriola*); Henbit dead-nettle (*Lamium amplexicaule*); Red deadnette (*Lamium purpureum*); Virginia pepperweed (*Lepidium virginicum*); Sprangletop (*Leptochloa* spp.); Carolina Gromwell (*Lithospermum* spp.); Perennial rye-grass (*Lolium perenne*); Pineappleweed (*Matricaria discoidea*); Redweed (*Melochia corchorifolia*); Mercury, Annual (*Mercurialis annua*); Carpetweed (*Mollugo verticillata*); Field forget-me-not (*Myosotis arvensis*); Evening Primrose, Cutleaf (*Oenothera laciniata*); Red Rice (*Oryza sativa*); Witchgrass (*Panicum cap/Hare*); Fall panicum (*Panicum dichotomiflorum*); Browntop Millet (*Panicum ramosum*); Texas panicum (*Panicum texanum*); Poppy (*Papaver rhoeas*); Pale persicaria (*Persicaria lapathifolia*); Redshank (*Persicaria maculosa*); Annual meadow-grass (*Poa annua*); Bluegrass (*Poa annua*); Bulbous bluegrass (*Poa bulbosa*); Annual polemonium (*Polemonium micranthum*); Jacob's Ladder (*Polemonium reptans*); Prostrate knotweed (*Polygonum aviculare*); Wild buckwheat (*Polygonum convolvulus*); Knotweed (*Polygonum* spp.); Purslane (*Portulaca oleracea*); Buttercup (*Ranunculus* spp.); Wild radish (*Raphanus raphanistrum*); Wild mignonette (*Reseda lutea*); Florida Pusley (*Richardia scabra*); Sheep's sorrel (*Rumex acetosella*); Groundsel (*Senecio*); Sesbania (*Sesbania* spp.); Foxtails (*Setaria* spp.); Green foxtail(Setaria *viridis*); Russian Thistle (*Sida spinosa*); Charlock (*Sinapis arvensis*); Tumble mustard(Jim Hill) (*Sisymbrium altissimum*); Prickly Sida/Teaweed (*SIda spinosa*); Black Nightshade (*Solanum nigrum*); Buffalobur (*Solanum rostratum*); Smooth sow-thistle (*Sonchus oleraceus*); Shattercane (*Sorghum bicolor*); Seedling Johnsongrass (*Sorghum halepense*); Volunteer sorghum, (*Sorghum* spp.); Corn spurrey (*Spergula arvensis*); Chickweed (*Stellaria media*); Field pennycress (*Thlaspi arvense*); Clovers (*Trifolium*); Volunteer wheat (*Triticum* spp.); Small nettle (*Urtica urens*); Cowcockle (*Vaccaria hispanica*); Speedwell, Ivyleaf (*Veronica hederifolia*); Speedwells *(Veronica* spp); Winter vetch (*Vicia villosa*); Field pansy (*Viola arvensis*); Cocklebur (*Xanthium pensylvanicum*).

Specific examples of ALS-tolerant plants that may be controlled very well by the present invention include *Stellaria* spp., *Papaver* spp. and *Galium* spp. Specific species of plants that have developed ALS-tolerance and may be controlled include *Stellaria media, Papaver rhoeas,* and *Galium aparine*.

As noted above, components (A) metribuzin and (B) one or more triazolopyrimidine sulfonanilides may be employed in the form of one or more compositions containing the active ingredients.

The compositions of the active components used in the present invention can be formulated in conventional manner, for example by mixing metribuzin and/or one and more triazolopyrimidine sulfonanilides with appropriate auxiliaries. Suitable auxiliaries will depend upon such factors as the type of formulation and the end use. Suitable auxiliaries are commercially available and will be known to the person skilled in the art.

In particular, the composition may comprise one or more auxiliaries selected from extenders, carriers, surfactants, stabilizers, anti-foaming agents, anti-freezing agents, preservatives, antioxidants, colorants, thickeners, solid adherents, fillers, wetting agents, dispersing agents, lubricants, anticaking agents and diluents. Such auxiliaries are known in the art and are commercially available. Their use in the formulation of compositions for use in the present invention will be apparent to the person skilled in the art.

Suitable formulations for applying the combination of metribuzin and one or more triazolopyrimidine sulfonanilides, whether together or separately, include water-soluble concentrates (SL), emulsifiable concentrates (EC), oil in water emulsions (EW), micro-emulsions (ME), suspension concentrates (SC), oil-based suspension concentrates (OD), flowable suspensions (FS), water-dispersible granules (WDG), water-soluble granules (SG), wettable powders (WP), water soluble powders (SP), granules (GR), encapsulated granules (CG), fine granules (FG), macrogranules (GG), aqueous suspo-emulsions (SE), capsule suspensions (CS) and microgranules (MG).

Preferred formulation types for compositions to be used in the present invention are suspension concentrates (SC), and oil-based suspension concentrates (OD).

The compositions may comprise one or more inert fillers. Such inert fillers are known in the art and available commercially. Suitable fillers include, for example, natural ground minerals, such as kaolins, aluminas, talc, chalk, quartz, attapulgite, montmorillonite, and diatomaceous earth, or synthetic ground minerals, such as highly dispersed silicic acid, aluminum oxide, silicates, and calcium phosphates and calcium hydrogen phosphates. Suitable inert fillers for granules include, for example, crushed and fractionated natural minerals, such as calcite, marble, pumice, sepiolite, and dolomite, or synthetic granules of inorganic and organic ground materials, as well as granules of organic material, such as sawdust, coconut husks, corn cobs, and tobacco stalks.

The compositions may include one or more surfactants, which are preferably non-ionic, cationic and/or anionic

in nature, and surfactant mixtures which have good emulsifying, dispersing and wetting properties, depending upon the active compound/compounds being formulated. Suitable surfactants are known in the art and are commercially available.

Suitable anionic surfactants can be both so-called water-soluble soaps and water-soluble synthetic surface-active compounds. Soaps which may be used include the alkali metal, alkaline earth metal or substituted or unsubstituted ammonium salts of higher fatty acids ($C_{10}$ to $C_{22}$), for example the sodium or potassium salt of oleic or stearic acid, or of natural fatty acid mixtures.

The surfactant system may comprise an emulsifier, dispersant or wetting agent of ionic or nonionic type. Examples of such surfactants include salts of polyacrylic acids, salts of lignosulphonic acid, salts of phenylsulphonic or naphthalenesulphonic acids, polycondensates of ethylene oxide with fatty alcohols or with fatty acids or with fatty amines, substituted phenols, especially alkylphenols, sulphosuccinic ester salts, taurine derivatives, especially alkyltaurates, and phosphoric esters of polyethoxylated phenols or alcohols.

The presence of at least one surfactant is generally required when the active compound and/or the inert carrier and/or auxiliary/adjuvant are insoluble in water and the vehicle for the final application of the composition is water.

The compositions optionally further comprise one or more polymeric stabilizers. Suitable polymeric stabilizers that may be used in the present invention include, but are not limited to, polypropylene, polyisobutylene, polyisoprene, copolymers of monoolefins and diolefins, polyacrylates, polystyrene, polyvinyl acetate, polyurethanes or polyamides. Suitable stabilizers are known in the art and are commercially available.

The surfactants and polymeric stabilizers mentioned above are generally believed to impart stability to the compositions, in turn allowing the compositions to be formulated, stored, transported and applied.

Suitable anti-foaming agents include all substances which can normally be used for this purpose in agrochemical compositions. Suitable anti-foaming agents are known in the art and are available commercially. Particularly preferred anti-foaming agents include modified polydimethylsiloxane formulations, such as SAG 1529 from Momentive, modified polyether-polysiloxanes, such as Breakthru® AF9902 from Evonik, mixtures of polydimethylsiloxanes and perfluoroalkylphosphonic acids, such as the silicone anti-foaming agents commercially available from GE or Compton.

Suitable preservatives for use in the compositions include all substances which can normally be used for this purpose in agrochemical compositions of this type and again are well known in the art. Suitable examples that may be mentioned include the commercially available preservatives PREVENTOL® (from Bayer AG) and PROXEL® (from Bayer AG) and NIPACIDE BIT 20 (from Clariant).

Suitable antioxidants for use in the compositions are all substances which can normally be used for this purpose in agrochemical compositions, as is known in the art. Preference is given to butylated hydroxytoluene.

Suitable thickeners for use in the compositions include all substances which can normally be used for this purpose in agrochemical compositions, for example xanthan gum, PVOH, cellulose and its derivatives, clay hydrated silicates, magnesium aluminum silicates or a mixture thereof. Again, such thickeners are known in the art and are available commercially.

The compositions may further comprise one or more solid adherents. Such adherents are known in the art and available commercially. They include organic adhesives, including tackifiers, such as celluloses or substituted celluloses, natural and synthetic polymers in the form of powders, granules, or lattices, and inorganic adhesives such as gypsum, silica, or cement.

In the method and use of the present invention, the combination of the active ingredients (A) metribuzin and (B) one or more triazolopyrimidine sulfonanilides can be applied to the plants, such as to the leaves of plants, and/or to their locus where control is desired, such as to the surrounding soil, by any convenient method. The "locus" refers to the place where plants are growing, the place where the plant propagation materials of plants are sown or the place where the plant propagation materials of plants will be sown. Suitable methods for applying the components are known in the art and include coating, spraying, sprinkling, dipping, soaking, injection, irrigation, and the like.

The method of the present invention may employ other pesticides, in addition to the combination of (A) metribuzin and (B) one or more triazolopyrimidine sulfonanilides. For example, compositions employed in the present invention may contain or be mixed with other pesticides or other active components, such as fungicides, insecticides and nematicides, growth factor enhancers and fertilizers, to enhance the activity of the treatment of the present invention or to widen its spectrum of activity. Similarly, the method of the present invention may be employed in conjunction with the use of one or more of the aforementioned active ingredients, again to obtain an enhanced efficacy or broader spectrum of activity.

Embodiments of the present invention will now be described by way of the following examples.

Unless otherwise indicated, percentages are weight percent.

EXAMPLES

## Formulation Examples

a) Suspension concentrate (SC) formulation

A suspension concentrate (SC) formulation was prepared from the components summarized in Table 1 below.

Table 1

| Components | Weight (%) | Function |
|---|---|---|
| Metribuzin | 32 | Active ingredient |
| Florasulam | 2 | Active ingredient |
| Polyalkylene glycol ether (ATLAS™ G-5000) | 2 | Wetting agent |
| Sodium alkyl naphthalene sulfonate, formaldehyde condensate (MORWET® D-425 POWDER from AkzoNobel N.V.) | 5 | Dispersing agent |
| Modified polydimethylsiloxane formulation (SAG 1529) | 1 | Antifoaming agent |
| Propylene glycol | 5 | Antifreeze agent |
| Xanthan gum(AG-RHO POL 23/W) | 0.2 | Thickener |
| 1,2-Benzisothiazol-3-one(NIPACIDE BIT 20) | 0.2 | Preservative |
| water | balance to 100% | Diluent |

b) Oil-based Suspension Concentrates (OD) formulation

An oil-based suspension concentrate (OD) formulation was prepared from the components summarized in Table 2 below.

Table 2

| Components | Weight (%) | Function |
|---|---|---|
| Metribuzin | 40 | Active ingredient |
| Penoxsulam | 5 | Active ingredient |
| Modified polyether-polysiloxane (Breakthru® AF9902 from Evonik) | 1 | Antifoaming agent |
| Ethoxylated castor oil (ALKAMULS OR/36 from Rhodia) | 15 | Emulsifier |
| Sodium alkylnaphthalenesulfonate, formaldehyde condensate (MORWET® D-425 POWDER from AkzoNobel N.V.) | 5 | Dispersing agent |
| Silica | 2 | Thickener |
| Vegetable oil | balance to 100% | Diluent |

A range of different formulations was prepared according to the methods described above. The formulation type and the active ingredients present in the formulations are summarized in Table 3 below. Examples C1 to C5 were prepared for comparison purposes. Examples 1 to 9 are examples of the present invention.

Table 3

| Example No. | Formulation type | Active ingredients (%) | | | | |
|---|---|---|---|---|---|---|
| | | A | B | | | |
| | | Metribuzin | B1 | B2 | B3 | B4 |
| | | | florasulam | diclosulam | flumetsulam | penoxsulam |
| C1 | SC | 50 | | | | |
| C2 | SC | | 40 | | | |
| C3 | OD | | | 40 | | |
| C4 | SC | | | | 40 | |
| C5 | OD | | | | | 40 |
| 1 | OD | 40 | 4 | | | |
| 2 | SC | 32 | 2 | | | |
| 3 | SC | 40 | 5 | | | |
| 4 | OD | 40 | 1 | | | |
| 5 | SC | 50 | 1 | | | |
| 6 | OD | 40 | | 4 | | |
| 7 | OD | 40 | | | 5 | |
| 8 | SC | 40 | | | | 2 |
| 9 | SC | 32 | | | | 2 |

## Biological examples

A synergistic effect exists with a combination of two active compounds when the activity of a combination of both active compounds is greater than the sum of the activities of the two active compounds applied alone.

The expected activity for a given combination of two active compounds can be calculated by the so called "Colby equation" (see S.R. Colby, "Calculating Synergistic and Antagonistic Responses of Herbicide Combinations", Weeds 1967, 15, 20-22):

whereby:

$$E = A + B - (A \times B/100)$$

wherein:

A = the activity percentage of compound A when active compound A is employed at an application rate of m g/ha;
B = the activity percentage of compound B when active compound B is employed at an application rate of n g/ha; and
E = the percentage of estimated activity when compounds A and B are employed together at an application rate of m g/ha and n g/ha.

If the actual activity observed for the combination of compounds A and B is greater than that calculated using the above formula, then the activity of the combination is superadditive, that is synergism is present.

The formulations of Examples C1 to C5 and 1 to 9 were tested for their biological activity against ALS-tolerant plants, in particular plants exhibiting resistance to triazolopyrimidine sulfonanilides, as follows:

Seeds of a normal wild variety and an ALS-resistant variant of each of *Stellaria media, Papaver rhoeas,* and *Galium aparine* were sown in trays of peat-based compost placed in a glasshouse to allow germination. At the cotyledon stage, four evenly sized seedlings were each transplanted into 9 cm diameter plastic pots containing loam soil mixed

with 25% by volume horticultural silver sand and further blended with coarse grit in the ratio 3:1. The resulting potting medium was supplemented with Osmacote slow-release fertilizer (16:8:9 + Mg) in an amount sufficient to provide 1.4 g per 0.35 L pot.

The formulations of each of Examples C1 to C5 and 1 to 9 were applied to the seedlings by spraying. Three replicate pots were used per treatment. Prior to spraying, the plants were watered overhead. To ensure the foliage was dry, water was not applied on the day of spraying, with the last overhead watering being the day before spraying. The herbicide formulations were made up with mains tap water. The laboratory track sprayer was set up with a Lurmark OIE80 Even spray nozzle to deliver 200 ± 20 L/ha using gear 4 and a pressure of 210 Pa (30 psi). The application rates of the active ingredients are set out in Table 4 below.

Following spraying, the plants were returned to the glasshouse and the sprayed pots were arranged in three randomized blocks. The temperature of the glasshouse ranged from 12.2°C to 16.1°C by day and 10.9°C to 13.3°C at night. The relative humidity ranged from 75 % to 101 %.

Throughout the experiment, the plants were watered to maintain the soil close to the field capacity. Following herbicide treatment, the plants were watered by sub-irrigation using individual plastic dishes for each pot to avoid any risk of cross contamination.

The visual percentage of control based on a 0 - 100 linear scale was assessed 21 days after treatment (DAT). The linear scale ranged from 0 (no effect) to 100 (dead plants).

The results of the visual inspections are summarized in Table 5 below. In Table 5, 'Obs' indicates an observed result and 'Exp' indicates the result expected from applying the Colby equation, discussed above.

Table 4

| Example No. | Application rate (g/ha) | | | | |
|---|---|---|---|---|---|
| | A | B | | | |
| | Metribuzin | B1 | B2 | B3 | B4 |
| | | florasulam | diclosulam | flumetsulam | penoxsulam |
| Untreated | 0 | 0 | 0 | 0 | 0 |
| C1 | 20 | - | - | - | - |
| C1 | 40 | - | - | - | - |
| C1 | 80 | - | - | - | - |
| C1 | 160 | - | - | - | - |
| C1 | 200 | - | - | - | - |
| C1 | 300 | - | - | - | - |
| C2 | - | 2 | - | - | - |
| C2 | - | 4 | - | - | - |
| C2 | - | 5 | - | - | - |
| C2 | - | 6 | - | - | - |
| C2 | - | 20 | - | - | - |
| C3 | - | - | 20 | - | - |
| C4 | - | - | - | 37.5 | |
| C5 | - | - | - | - | 10 |
| C5 | - | - | - | - | 5 |
| 1 | 20 | 2 | - | - | - |
| 2 | 80 | 5 | - | - | - |
| 3 | 160 | 20 | - | - | - |
| 4 | 160 | 4 | - | - | - |

(continued)

| Example No. | Application rate (g/ha) | | | | |
|---|---|---|---|---|---|
| | A | B | | | |
| | Metribuzin | B1 | B2 | B3 | B4 |
| | | florasulam | diclosulam | flumetsulam | penoxsulam |
| 5 | 300 | 6 | - | - | - |
| 6 | 200 | - | 20 | - | - |
| 7 | 300 | - | - | 37.5 | - |
| 8 | 200 | - | - | - | 10 |
| 9 | 80 | - | - | - | 5 |

Table 5

| Example No. | Percentage control (21 DAT) | | | | | | | | |
|---|---|---|---|---|---|---|---|---|---|
| | Type of weeds | | | | | | | | |
| | *Stellaria media* (wild) | *Stellaria media* (ALS resistant) | | *Papaver rhoeas* (wild) | *Papaverrhoeas* (ALS resistant) | | *Galium asparine* (wild) | *Galium asparine (ALS resistant)* | |
| | Obs | Obs | Exp | Obs | Obs | Exp | Obs | Obs | Exp |
| Untreated | 0 | 0 | 0 | 0 | 0 | 0 | 0 | 0 | 0 |
| C1 | 15 | 8 | - | 12 | 2 | - | 8 | 2 | - |
| C1 | 40 | 20 | - | 30 | 18 | - | 15 | 5 | - |
| C1 | 55 | 36 | - | 45 | 28 | - | 28 | 12 | - |
| C1 | 60 | 48 | - | 50 | 30 | - | 50 | 20 | - |
| C1 | 68 | 55 | - | 60 | 35 | - | 55 | 22 | - |
| C1 | 75 | 65 | - | 68 | 50 | - | 65 | 48 | - |
| C2 | 10 | 0 | - | 8 | 0 | - | 5 | 0 | - |
| C2 | 15 | 0 | - | 16 | 0 | - | 10 | 0 | - |
| C2 | 40 | 0 | - | 50 | 0 | - | 32 | 0 | - |
| C2 | 50 | 0 | - | 62 | 0 | - | 40 | 2 | - |
| C2 | 70 | 2 | - | 75 | 5 | - | 58 | 5 | - |
| C3 | 48 | 5 | - | 50 | 2 | - | 30 | 0 | - |
| C4 | 35 | 0 | - | 48 | 0 | - | 40 | 0 | - |
| C5 | 62 | 5 | - | 40 | 2 | - | 50 | 5 | - |
| C5 | 30 | 0 | - | 20 | 0 | - | 30 | 0 | - |
| 1 | 60 | 52 | 8 | 60 | 58 | 2 | 58 | 42 | 2 |
| 2 | 99 | 96 | 36 | 98 | 95 | 28 | 98 | 96 | 12 |
| 3 | 92 | 88 | 49.04 | 92 | 90 | 33.5 | 94 | 92 | 24 |
| 4 | 90 | 82 | 48 | 88 | 80 | 30 | 85 | 80 | 20 |
| 5 | 90 | 88 | 65 | 92 | 90 | 50 | 88 | 85 | 49.04 |
| 6 | 92 | 90 | 57.25 | 90 | 85 | 36.3 | 88 | 85 | 68.5 |

(continued)

| Example No. | Percentage control (21 DAT) | | | | | | | | |
|---|---|---|---|---|---|---|---|---|---|
| | Type of weeds | | | | | | | | |
| | *Stellaria media* (wild) | *Stellaria media* (ALS resistant) | | *Papaver rhoeas* (wild) | *Papaverrhoeas* (ALS resistant) | | *Galium asparine* (wild) | *Galium asparine (ALS resistant)* | |
| | Obs | Obs | Exp | Obs | Obs | Exp | Obs | Obs | Exp |
| 7 | 92 | 88 | 65 | 92 | 90 | 50 | 92 | 88 | 48 |
| 8 | 94 | 92 | 57.25 | 92 | 90 | 36.3 | 92 | 88 | 25.9 |
| 9 | 98 | 95 | 36 | 97 | 94 | 28 | 98 | 95 | 12 |

From a review of the data presented in Tables 4 and 5 above, as expected, metribuzin caused damage to both the ALS-tolerant and wild plants (composition C1).

Further, as expected, the triazolopyrimidine sulfonanilides, had little or no effect on all ALS-tolerant plants (compositions C2 to C5), while significantly damaging the wild (non-tolerant) plants.

Surprisingly, the combination of metribuzin with each of the triazolopyrimidine sulfonanilides, caused damage to the ALS-tolerant plants that was significantly in excess of that caused by the metribuzin alone. The data demonstrate that a combination of metribuzin and triazolopyrimidine sulfonanilide exhibits synergy in the control of the ALS-tolerant plants.

## Claims

1. A method of controlling the growth of ALS-tolerant plants, the method comprising applying to the plants and/or their locus a herbicidally effective amount of a combination of (A) metribuzin and (B) one or more triazolopyrimidine sulfonanilides.

2. The method according to claim 1, wherein the one or more triazolopyrimidine sulfonanilides are selected from cloransulam, diclosulam, florasulam, flumetsulam, metosulam, penoxsulum and pyroxsulam; preferably wherein the one or more triazolopyrimidine sulfonanilides are selected from florasulam, diclosulam, flumetsulam and penoxsulam; more preferably wherein component (B) comprises florasulam.

3. The method according to any preceding claim, wherein components (A) and (B) are applied at an application rate of from 0.02 kg/ha to 2 kg/ha of the total amount of active ingredients being applied, preferably from 0.05 kg/ha to 1.5 kg/ha.

4. The method according to any preceding claim, wherein component (A) metribuzin is applied in an amount of at least 5 g/ha, preferably at least 10 g/ha, more preferably at least 20g/ha; in particular 80 g/ha.

5. The method according to any preceding claim, wherein component (B) one or more triazolopyrimidine sulfonanilides is applied in an amount of at least 1 g/ha, preferably at least 1.5 g/ha, more preferably at least 2 g/ha, still more preferably at least 4 g/ha, in particular from 5 to 70 g/ha.

6. The method according to any preceding claim, wherein the weight ratio of component (A) metribuzin to component (B) one or more triazolopyrimidine sulfonanilides is from 1:4 to 250:1, preferably from 1:1 to 200:1, more preferably from 1:1 to 100:1, still more preferably from to 1:1 to 70:1, in particular from 1:1 to 16:1.

7. The method according to any preceding claim, wherein the component (A) metribuzin to component (B) one or more triazolopyrimidine sulfonanilides are applied to the plants post-emergence.

8. The method according to any preceding claim, wherein the ALS-tolerant plants are in a crop selected from wheat, barley, rye, oats, maize and triticale.

9. The method according to any preceding claim, wherein the ALS-tolerant plants are one or more of *Stellaria* spp.,

*Papaver* spp. and *Galium* spp.

**10.** The use of a herbicidally effective amount of a combination of (A) metribuzin and (B) one or more triazolopyrimidine sulfonanilides in the control of the growth of ALS- tolerant plants.

**11.** The use according to claim 10, wherein the one or more triazolopyrimidine sulfonanilides are selected from cloransulam, diclosulam, florasulam, flumetsulam, metosulam, penoxsulum and pyroxsulam; preferably wherein the one or more triazolopyrimidine sulfonanilides are selected from florasulam, diclosulam, flumetsulam and penoxsulam; more preferably wherein component (B) comprises florasulam.

**12.** The use according to either of claims 10 or 11 in the protection of a crop selected from wheat, barley, rye, oats, maize and triticale.

**13.** The use according to any of claims 10 to 12, wherein the ALS-tolerant plants are one or more of *Stellaria* spp., *Papaver* spp. and *Galium* spp.

**14.** A composition for the control of ALS-tolerant plants comprising a herbicidally effective amount of a combination of (A) metribuzin and (B) one or more triazolopyrimidine sulfonanilides, preferably a suspension concentrate (SC) or an oil-based suspension concentrate (OD).

**15.** The composition according to claim 14, wherein the one or more triazolopyrimidine sulfonanilides are selected from cloransulam, diclosulam, florasulam, flumetsulam, metosulam, penoxsulum and pyroxsulam; preferably wherein the one or more triazolopyrimidine sulfonanilides are selected from florasulam, diclosulam, flumetsulam and penoxsulam; more preferably wherein component (B) comprises florasulam.

Europäisches Patentamt
European Patent Office
Office européen des brevets

# EUROPEAN SEARCH REPORT

Application Number
EP 17 16 7944

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 102 273 466 A (SHAANXI MEIBANG PESTICIDE CO) 14 December 2011 (2011-12-14) * abstract * | 14,15 | INV. A01N43/707 A01N43/90 |
| X | RONALD F KRAUSZ ET AL: "Winter Annual Weed Control with Fall-Applied Corn (Zea mays) Herbicides", WEED TECHNO, ALLEN PRESS, INC, US, vol. 17, no. 3, 1 January 2003 (2003-01-01), pages 516-520, XP009185293, ISSN: 0890-037X, DOI: 10.1614/WT02-092 * tables 2-4 * | 14,15 | |
| X | JEFF W BARNES AND LAWRENCE R OLIVER: "Preemergence Weed Control in Soybean with Cloransulam", WEED TECHNO, ALLEN PRESS, INC, US, vol. 18, no. 4, 1 January 2004 (2004-01-01), pages 1077-1090, XP009185294, ISSN: 0890-037X, DOI: 10.1614/WT-03-254R1 * the whole document * | 14,15 | TECHNICAL FIELDS SEARCHED (IPC) A01N |
| X | EP 3 087 836 A1 (ROTAM AGROCHEM INT CO LTD [HK]) 2 November 2016 (2016-11-02) * paragraph [0009] * * paragraph [0012] * * paragraph [0014] * * table A * | 14,15 | |
| X | US 2012/252669 A1 (AMELA MONICA SORRIBAS [US] ET AL) 4 October 2012 (2012-10-04) * paragraph [0009] * * paragraph [0006] * * page 9 * | 14,15 | |

-/--

1

The present search report has been drawn up for all claims

| Place of search | Date of completion of the search | Examiner |
|---|---|---|
| Munich | 10 July 2017 | Staber, Brigitte |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 17 16 7944

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RODRIGO WERLE ET AL: "Distribution of Herbicide-Resistant Shattercane and Johnsongrass Populations in Sorghum Production Areas of Nebraska and Northern Kansas", AGRONOMY JOURNAL, vol. 108, no. 1, 1 January 2016 (2016-01-01), pages 321-328, XP055389136, DOI: 10.2134/agronj2015.0217 * the whole document * ----- | 1-13 | |
| A | HUSREV MENNAN ET AL: "Response of two catchweed bedstraw ( Galium aparine ) populations to post-emergence herbicides in winter wheat", INTERNATIONAL JOURNAL OF PEST MANAGEMENT, vol. 57, no. 4, 1 October 2011 (2011-10-01), pages 347-356, XP055389137, GB ISSN: 0967-0874, DOI: 10.1080/09670874.2011.622085 * the whole document * ----- | 1-13 | TECHNICAL FIELDS SEARCHED (IPC) |
| A | AVILA LUIS A ET AL: "Assessment of acetolactate synthase (ALS) tolerance to imazethapyr in red rice ecotypes (Oryza spp) and imidazolinone tolerant/resistant rice (Oryza sativa) varieties", PEST MANAGEMENT SCIENCE, WILEY & SONS, BOGNOR REGIS; GB, vol. 61, no. 2, 1 February 2005 (2005-02-01), pages 171-178, XP002544922, ISSN: 1526-498X, DOI: 10.1002/PS.966 [retrieved on 2004-10-11] * the whole document * ----- | 1-13 | |

The present search report has been drawn up for all claims

1

| Place of search | Date of completion of the search | Examiner |
|---|---|---|
| Munich | 10 July 2017 | Staber, Brigitte |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

page 2 of 2

## ANNEX TO THE EUROPEAN SEARCH REPORT ON EUROPEAN PATENT APPLICATION NO. EP 17 16 7944

This annex lists the patent family members relating to the patent documents cited in the above-mentioned European search report. The members are as contained in the European Patent Office EDP file on
The European Patent Office is in no way liable for these particulars which are merely given for the purpose of information.

10-07-2017

| Patent document cited in search report | Publication date | Patent family member(s) | Publication date |
|---|---|---|---|
| CN 102273466 A | 14-12-2011 | NONE | |
| EP 3087836 A1 | 02-11-2016 | EP 3087836 A1 | 02-11-2016 |
| | | TW 201709822 A | 16-03-2017 |
| | | WO 2016173491 A1 | 03-11-2016 |
| US 2012252669 A1 | 04-10-2012 | CA 2830650 A1 | 04-10-2012 |
| | | EP 2690957 A1 | 05-02-2014 |
| | | US 2012252669 A1 | 04-10-2012 |
| | | WO 2012135441 A1 | 04-10-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 102273466 A


### Non-patent literature cited in the description


- **S.R. COLBY.** Calculating Synergistic and Antagonistic Responses of Herbicide Combinations. *Weeds,* 1967, vol. 15, 20-22